# EUROPEAN PATENT APPLICATION

(11) **EP 1 056 022 A2**
(43) Date of publication of application: **29.11.2000**
(21) Application number: 00110966.9
(22) Date of filing: 26.05.2000
(51) Int. Cl.: G06F 17/30, G06F 17/24

(54) **Automatic digital content-organizing system and record medium having automatically organized digital content recorded therein**

(30) Priority: 27.05.1999 JP 14844299
(71) Applicant: Rip Japan Co., Ltd., Oota-Ku, Tokyo 144-0051 (JP); Yukino, Kensaku, Shinjuku-ku, Tokyo 162-0801 (JP)
(72) Inventor: Yukino,Kensaku, Tokyo 162-0801 (JP)
(74) Representative: Casalonga, Axel

(57) **Abstract**

An automatic digital content-organizing system and a record medium having automatically organized digital content recorded therein, which is designed to allow a user and a Web designer to easily change design of a created HTML page without the aid of a programmer. The automatic digital content-organizing system according to the present invention creates HTML pages by the steps of: indicating to a program types of the HTML pages and a method for creating the HTML pages, all of which HTML pages form a site; defining designs of the created HTML pages in combination with such indicated types and method; regularly extracting data such as commodities from a single or multiple databases: and, permitting the extracted data to be embedded in the HTML pages based on templates that include such defined designs.

## Description

### BACKGROUND OF THE INVENTION

### 1. Field of the Invention

This invention relates to a digital content-organizing system. More particularly, it relates to an automatic digital content-organizing system and a record medium having automatically organized digital content recorded therein, such as an on-line system (e.g., WWW or World Wide Web on the Internet and personal computer-to-personal computer communication), an electronic catalog, and a CD (compact disk)-ROM.

### 2. Description of the Related Art

The widespread use of personal computers and the Internet causes commerce via networks what is called on-line shopping to be becoming much more universal at an increasing rate. In such on-line shopping, enumerated commodities are displayed on a homepage. In addition, commodity catalogs are provided as electronic data to purchasers.

Digital content such as the homepage and electronic catalog for use in such on-line shopping has heretofore been made up by either a manual organizing process or a dynamic organizing process based on a database. In the manual organizing process, individual pages are manually prepared, and further a menu page linked to such individual pages is manually drawn up. In this way, the homepage is organized. In the dynamic organizing process in which the homepage is created on the basis of the database, a variety of proposals such as Active Server Page (hereinafter called "ASP") provided by the Microsoft Inc. as well as CGI (Common Gateway Interface) has been made and then utilized.

However, a first problem incurred with the dynamic organizing process is that design of a created HTML page is difficult to change. In addition, an HTML page having a complicated design is difficult to create.

For CGI, in some cases, CGI itself is written in script language such as "perl." In other cases, CGI is a dedicated execute form program that is described in C-language and is then compiled. As a result, design of a created HTML file is embedded in a program by a system developer, and it is nearly impossible for a user to change the design. Further, it is laborious for the system developer to change the design, and a relatively upper amount of development cost is required to pay when the user passes an order to the system developer to change the design.

For ASP, the user is usually disallowed to change the design because database retrieval and output specification are described in the HTML file. As a result, the HTML page produced by CGI and ASP is often poor in design, and thus less appeals to the viewer. In addition, creation of an elaborate design results in high cost because man-day for development is increased.

A second problem with the dynamic organizing process is that a site page structure is fixed, and is difficult for the user to change. For example, assume that there is provided a Web site page structure created by a plurality of HTML pages such as a top page of ^{"}index.html" and subsequent pages that include a retrieval-indicating page, a retrieval result-displaying page, a descriptive page as to how an order is placed, and a shop guide page. Then, a portion of the above page structure, which is created by CGI, is difficult to change.

In view of the above, an object of the present invention is to provide an automatic digital content-organizing system and a record medium having automatically organized digital content recorded therein, which is designed to allow a user and a Web designer to easily change design of a created HTML page without the aid of a programmer.

A further object of the present invention is to provide an automatic digital content-organizing system and a record medium having automatically organized digital content recorded therein, which is designed to allow a user and a Web designer to easily change a structure and design of a HTML page to be created by referenced data in a database being embedded in the HTML page.

### SUMMARY OF THE INVENTION

In order to achieve the above objects, an automatic digital content-organizing system according to the present invention creates HTML pages by the steps of: indicating to a program types of the HTML pages and a method for creating the HTML pages, all of which HTML pages form a site; defining designs of the created HTML pages in combination with such indicated types and method; regularly extracting data such as commodities from a single or multiple databases: and, permitting the extracted data to be embedded in the HTML pages based on templates that include such defined designs.

More specifically, an aspect of the present invention provides an automatic digital content-organizing system comprising:
a means for preparing digital content including a character and an image portion by means of either HTML or any other protocol-based digital content description language for purposes of information processing;
a database information storage means for storing a single or multiple databases, the database being a source of information for creating the digital content;
a management means for administering retrieval of data from the database information storage means and input-output of the data from the database information storage means;
a page-creating control information storage means for storing page-creating control information, the page-creating control information containing a page structure and a method for creating the page structure, the page structure consisting of a plurality of kinds of pages;
a page design information storage means for storing page design information in a template that contains two tags, in which one of the tags specifies respective designs of the page structure and respective positions at which fields of the database are displayed, while another tag is a link failure prevention-indicating tag that functions to avoid including a description of a link to image information and/or any other page when the image information and/or other page is absent;
a means for reading out the page-creating control information from the page-creating control information storage means;
a means for reading out information in the database from the database information storage means according to the page-creating control information, in which the information in the database is read out in a predetermined format under control of the management means;
a means for reading out optimum page design information from the page design information storage means according to the page-creating control information; and,
a program-storing means for storing a program, the program permitting such read information in the database to be embedded in the page design information, the program thereby producing pages that form the digital content.

A preferred embodiment of the present invention provides an automatic digital content-organizing system as described above, further comprising:
the page design information storage means for storing a template that contains a substitution-specifying tag, the substitution-specifying tag replacing a predetermined field of the database with a predetermined description, and then displaying such a replaced description when the database has a predetermined value in the predetermined field; and,
the program-storing means for storing a program that executes such substitutional specification.

A further preferred embodiment of the present invention provides an automatic digital content-organizing system as previously described, further comprising:
the page-creating control information storage means for storing the page-creating control information, to which condition output-indicating information is added, the condition output-indicating information determining on the basis of a value in a particular field of the database whether a particular page is created;
the page design information storage means for storing the page design information, to which a condition output-indicating tag is added, the condition output-indicating tag indicating depending upon a value in a particular field of the database whether a predetermined character string including a link to any other page is output; and,
the program-storing means for storing a program that executes such condition output indication.

Another aspect of the present invention provides a record medium having digital content recorded therein, which digital content is automatically organized by the above-described automatic digital content-organizing system.

### BRIEF DESCRIPTION OF THE DRAWINGS

This and other object, features, and advantages of the present invention will become more apparent upon a reading of the following detailed description and drawings, in which:
Fig. 1 is a block diagram, illustrating a system for automatically organizing an on-line shopping Web site according to the present invention;
Fig. 2 is a flowchart, showing one embodiment of an automatic digital content-organizing system according to the present invention;
Fig. 3 is an illustration, showing a site structure created according to embodiments given in this specification;
Fig. 4 is an illustration, showing definitions in fields of a commodity database;
Fig. 5 is an illustration, showing a first page of definitions in fields of a shop database;
Fig. 6 is an illustration, showing a second page of definitions in fields of the shop database;
Fig. 7 consisting of Figs. 7A to 7D is an illustration, showing one embodiment of a first page of a page-creating control file drawn up as page-creating control information;
Fig. 8 consisting of Figs. 8A to 8D is an illustration, showing a second page of the page-creating control file;
Fig. 9 is an illustration, showing one embodiment of a first page of a template of a "top page ";
Fig. 10 is an illustration, showing a second page of the template;
Fig. 11 is an illustration, showing a third page of the template;
Fig. 12 is an illustration, showing one embodiment of a first page of a template of a "commodity page";
Fig. 13 is an illustration, showing a second page of the template;
Fig. 14 is an illustration, showing a third page of the template;
Fig. 15 is an illustration, showing a fourth page of the template;
Fig. 16 is an illustration, showing a fifth page of the template;
Fig. 17 is an illustration, showing a "top page" using a browser, which top page is created by the automatic digital content-organizing system according to the present invention; and,
Fig. 18 is an illustration, showing a "commodity page" by means of the browser, which commodity page is generated by the automatic digital content-organizing system according to the present invention.

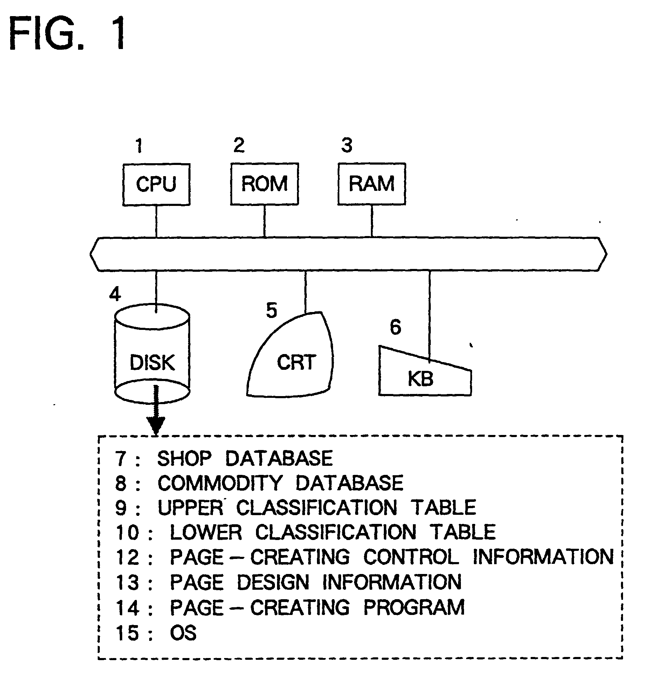

Embodiments of the present invention will be described in detail with appropriate reference to the drawings. Fig. 1 is a block diagram, illustrating a system for automatically organizing an on-line shopping Web site which includes two main databases and two subsidiary databases. The main databases include a shop database and a commodity database. The shop database stores information on an on-line shopping store. The subsidiary databases include upper and lower classification tables, which are referenced from the commodity database.

The above system includes a CPU 1, a boot ROM 2, a RAM 3, a disk 4, a display (CRT) 5, and a keyboard (KB) 6. The boot ROM 2 is read when the system is activated. Further, when the system is activated, then an OS (operating system) 15 is read from the disk 4, while the RAM 3 is used as a working area for various programs. The display 5 and the keyboard 6 are responsible for a man-machine interface.

The disk 4 stores data or programs that follow: a shop database (shopinfo.DB) 7; a commodity database (catalog.DB) 8; a upper classification table 9; a lower classification table 10; a database management system (DBMS) 11; a data file of page-creating control information 12; a template file as page design information 13; and, a page-creating program 14. The upper and lower classification tables 9, 10 are referenced from the commodity database 8. The database management system (DBMS) 11 is actuated when data are fed into and out of the database. The page-creating program 14 functions to create pages.

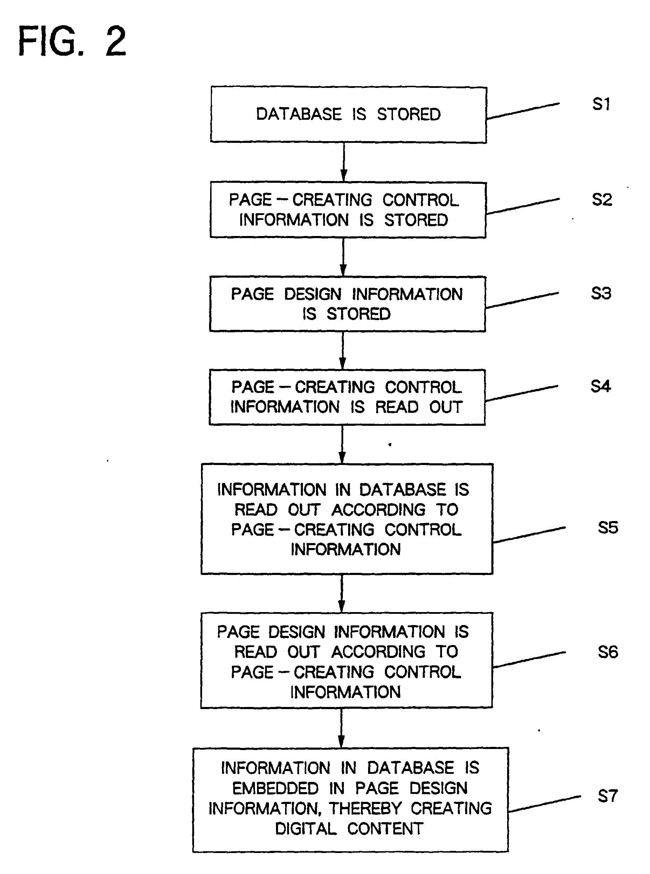

Fig. 2 is a flowchart, showing one embodiment of an automatic digital content-organizing system according to the present invention. At step S1, a single or multiple databases as a source of information for creating digital content is or are stored. The database is either saved in advance by a user or reproduced from any other storage means to a database information storage means that constitutes the automatic digital content-organizing system. At step S2, the page-creating control information containing a page structure and a method for creating the page structure is stored. The page structure consists of a plurality of kinds of pages such as a top page, annexed pages, commodity menu pages, and a list page enumerating the commodity menu pages. At step S3, the page design information in a template that contains tags is stored. One of the tags specifies respective designs of the above-described page structure and respective positions at which fields of the database are displayed. The other tag is a link failure prevention-indicating tag as a preventive against a disordered display on a screen which otherwise would be attributable to a link error in the absence of image information and linked pages, as detailed afterwards. At step S4, the page-creating control information is read out from a page-creating control information storage means. At step S5, information in the database is read out from the database information storage means according to the page-creating control information that is stored at step S2. In this case, the information in the database is read out in a predetermined format under the control of any management means such as the database management system. At step S6, optimum page design information is read out from a page design information storage means according to the page-creating control information that is stored at step S2. At step S7, the information in the database, which has been read out at step S5, is embedded in the page design information, thereby producing pages that form digital content.

A preferred embodiment of the present invention is that a template containing a substitution-specifying tag is stored at step S3. The substitution-specifying tag replaces a predetermined field of the database with a predetermined description, and then displays such a replaced description when the database has a predetermined value in the above-mentioned predetermined field. A further preferred embodiment is that such substitutional specification is executed at step S7.

A yet further preferred embodiment is that the page-creating control information having condition output-indicating information added thereto is stored at step S2. The condition output-indicating information determines, on the basis of a value in a particular field of the database, whether a particular page is created. Another desirable embodiment of the present invention is that the page design information having a condition output-indicating tag added thereto is stored at step S3. The condition output-indicating tag indicates, depending upon a value in a particular field of the database, whether a predetermined character string including a link to any other page is output. A still further desirable embodiment is that such condition output indication is executed at step S7.

In the above embodiment, page-creating control and page design are indicated and then executed by a program at step S7. A page-creating control means for providing such page-creating control indicates the following for each kind of a page to be created: a type of the page; a title of the page; a created HTML filename; conditions to select a record of a commodity database to be output; conditions to recognize whether the page is updated; a template filename to be used; the number of output (blocking factor) in which a plurality of records of the commodity database are output to a page in list pages; and, field names of the commodity database to be output when the above records of the commodity database are output to the page. The page-creating control means corresponds to a programmatic description for CGI and ASP.

A page-designing means for drawing the above-mentioned page design includes a template file and a memory or any other storage medium for storing the template file. The template file is an HTML file in which variable tags are contained and embedded for each kind of a page to be created. The page-designing means corresponds to a descriptive portion of an HTML file for CGI and ASP.

A template stored in the page design information storage means contains a description characteristic of the present invention. More specifically, such a characteristic description include the link failure prevention-indicating tag and a character string substitution-indicating tag. The former tag prevents a display on a screen from being disordered when an image file is absent. In addition, in a menu page in which commodity names are enumerated from a plurality of records of the commodity database, the link failure prevention-indicating tag inhibits a description of a link from one commodity page to another from being created when the number of retrieval is fewer than the blocking factor. Meanwhile, the character sting substitution-indicating tag indicates replacement of data in the database, and such indication only written to a template provides a display comparable to that is acquired when a partitioned table is look up. Further, the character string substitution-indicating tag makes a change in design. Yet further, the template stored in the page design information storage means contains a condition output-indicating tag. This tag indicates whether a particular page is created, depending upon a value in a predetermined field of a shop database. Thus, the above-described template creates a perfect HTML file, and a site structure is controlled. Further details on the above-mentioned three types of tags are discussed afterwards.

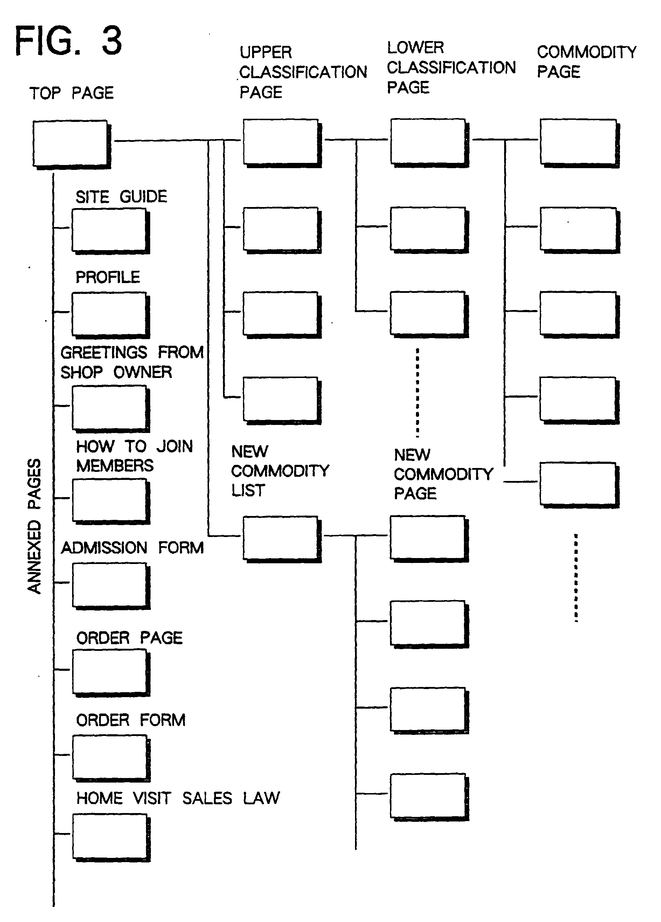

Fig. 3 illustrates a site structure that is generated according embodiments given in this specification. A top page is an index.htm page. The top page is shown branched into links in a tree fashion. A list of the upper classification table is displayed in the top page.

In Fig. 3, the annexed pages ranging from a site guide to a home visit sales law are limited to displaying information on a shop database. For membership system-related and order-related pages among the annexed pages, creation of such pages is controlled by the condition output-indicating tag that is placed in an under-mentioned field of "processing condition" of a page-creating control file.

As illustrated by a tree structure in Fig. 3, the upper classification page displays a list of lower classification pages, and thus may be called a lower classification list page. In the upper classification page, a list of lower classifications is displayed, which are branched from a commodity that belongs to a certain upper classification. Meanwhile, as illustrated by the tree structure in Fig. 3, the lower classification page displays a list of commodity pages, and thus may be called a commodity list page. The lower classification page is a commodity-enumerated page in which a predetermined combination of upper and lower classifications are provided.

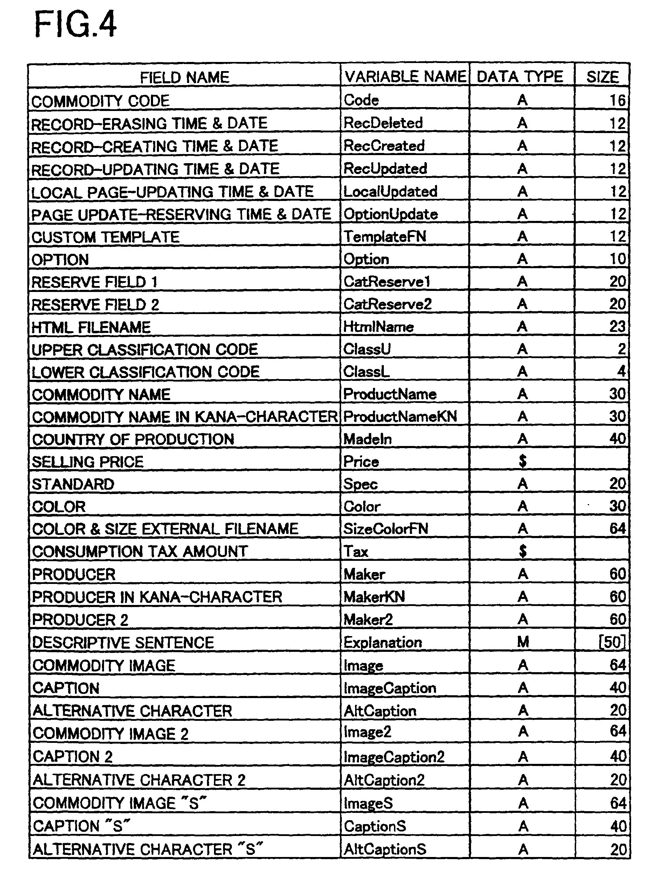

Fig. 4 is an illustration, showing definitions in fields of a commodity database. A feature of the definitions is that one field of "record-updating time & date" and another field of "local page-updating time & date" are provided to minimize commodity pages in order to avoid creating unnecessary pages. A further feature of the definitions is that a field of "custom template" is provided. The custom template is used when a user or a Web designer wants to change a page design for each record of the commodity database.

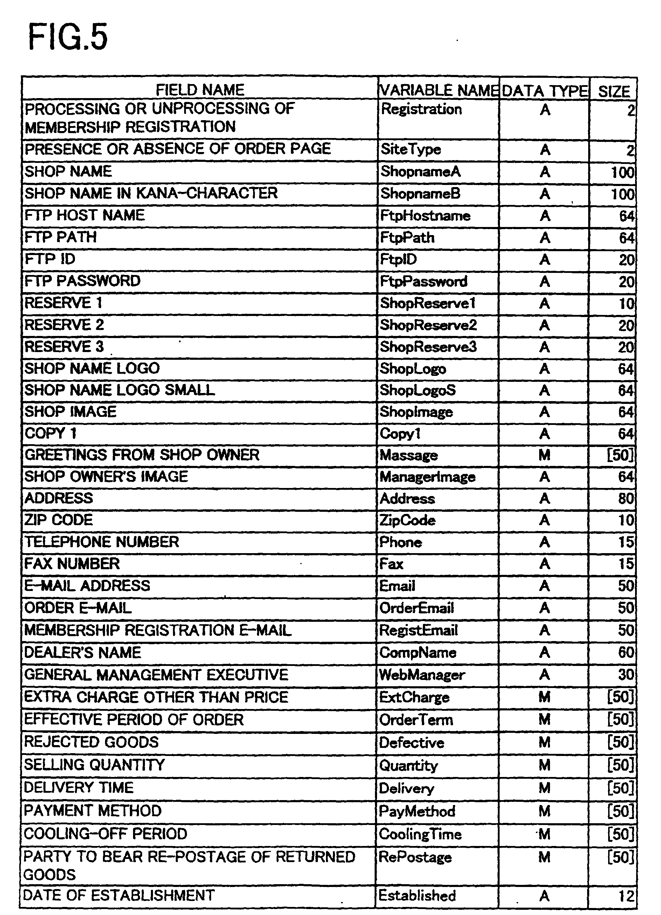

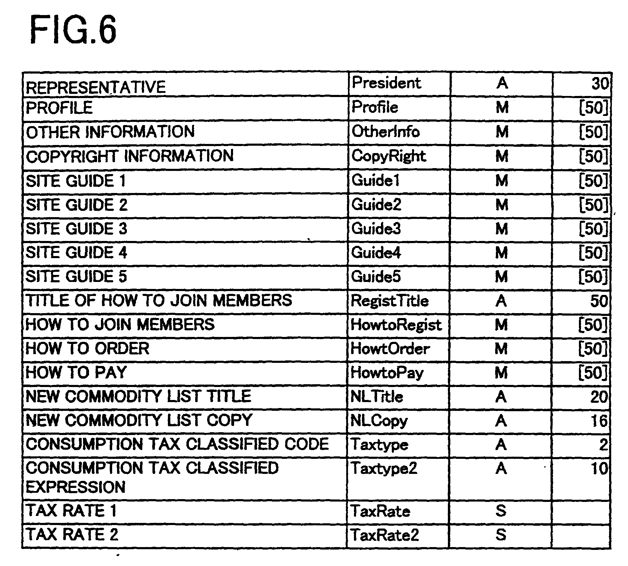

Figs. 5 and 6 are illustrations, showing definitions in fields of a shop database. In the definitions, important fields are "processing or unprocessing of membership registration" and "presence or absence of order page." Respective values in these fields are used for undermentioned condition output indication.

Some shopping sites are provided for membership registration, but others are not. Further, aside from the shopping site, there may be a desire to establish a catalog site without the ability to accept orders. In such cases, a predetermined value (01) is entered into the above fields of the shop database, thereby creating membership registration-related and order-related pages.

In the commodity database, a field of "page update-reserving date & time" is provided to permit data on a new commodity to be opened to the public on scheduled date and time, which data are saved in advance. In addition, the field of "page update-reserving date & time" is provided to permit seasonal commodities to be changed at one time on a specified date.

In the commodity database, a field of "option" is used to create a new commodity page. In this case, a commodity page is generated for each commodity. In addition, in such a page, detailed information on a commodity including an image of the commodity is displayed. Regarding the commodity image, three or fewer images can be registered, and are then usable within the range of such a quantity, depending upon intended use of each commodity. The under-mentioned link failure prevention-indicating tag is placed at an image portion on a template of the commodity page. The field of "option" of the commodity database controls a new commodity list and a new commodity page. The commodities to be displayed in the new commodity list and new commodity page are limited to those identified by "N's" that are input in the field of "option", and are further limited to five or fewer commodities enumerated in counter-chronological order of "record-updating time & date." Such a commodity record-selecting condition is described in a field of "record-selecting condition" of the page-creating control file in SQL sentence, and can be changed by a user. Similarly, the field of "option" can be used for other purposes such as, e.g., a special sale or a year-end bargain sale.

In the commodity database, a field of "color & size external filename" is used to display a table of commodities defined by a plurality of standards in which different colors and sizes are available. When a template file includes a tag of "external file reference output option" ([@%file catalog₋SizeColorFN@]}, then a filename of a HTML tagged external file is input into the field of "color & size external filename", with the result that the content of the file is output. In this way, a table in which a variety of colors and sizes are provided for selection can easily be integrated into the commodity page.

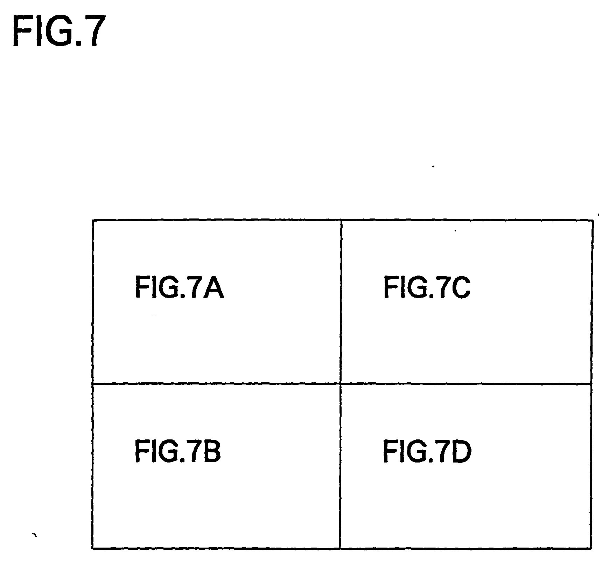

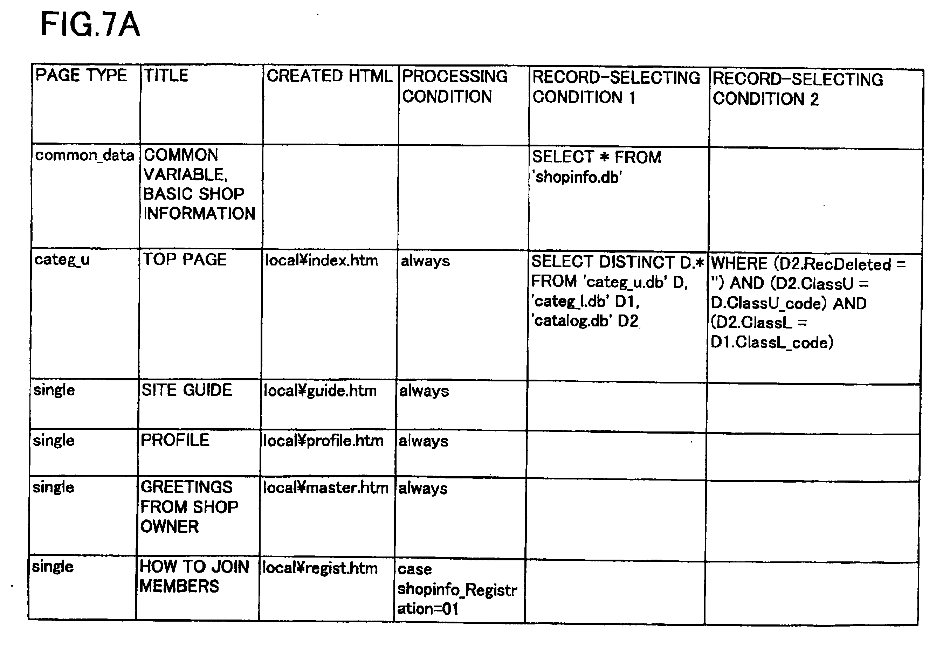

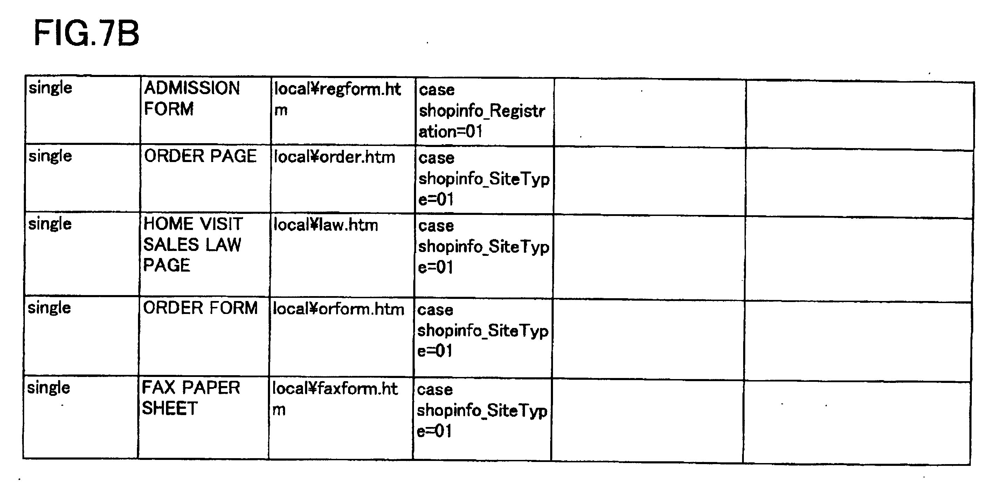

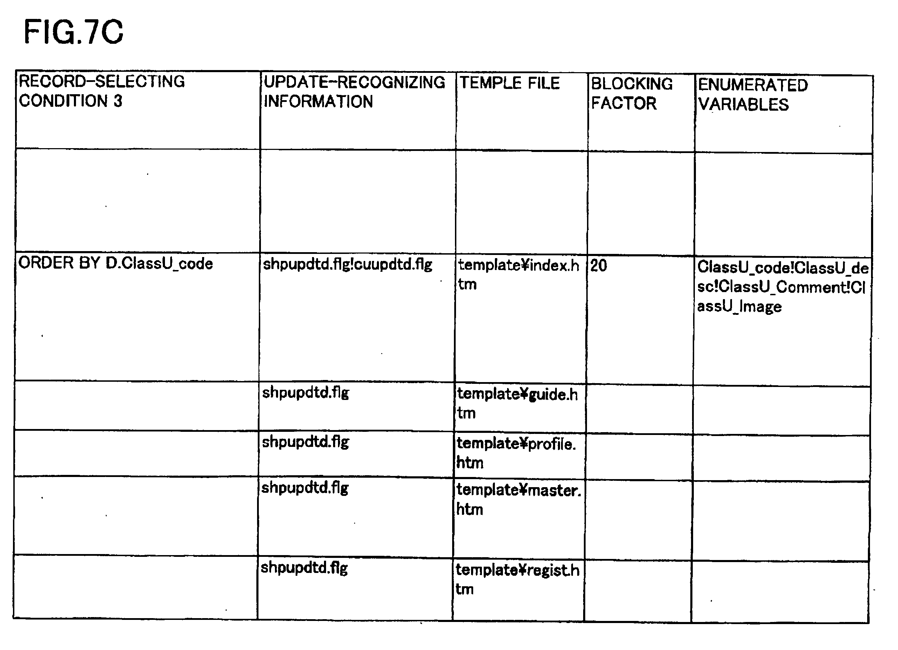

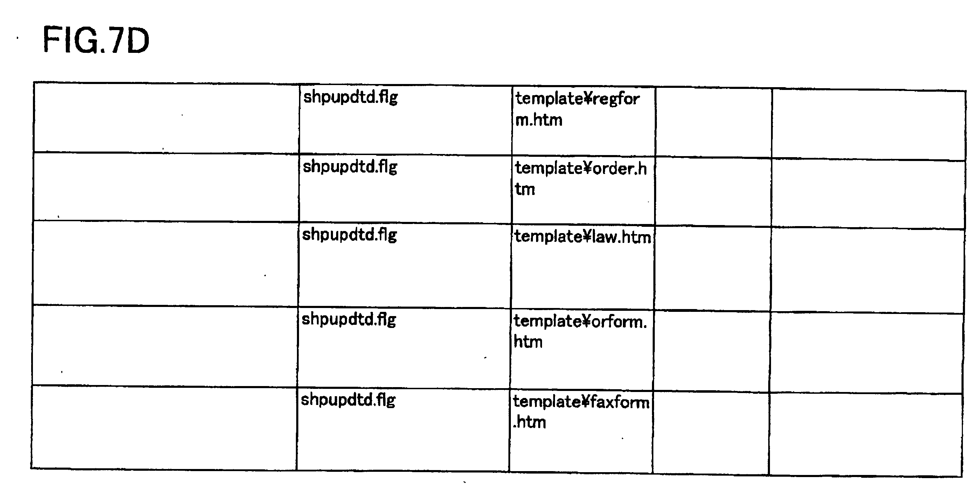

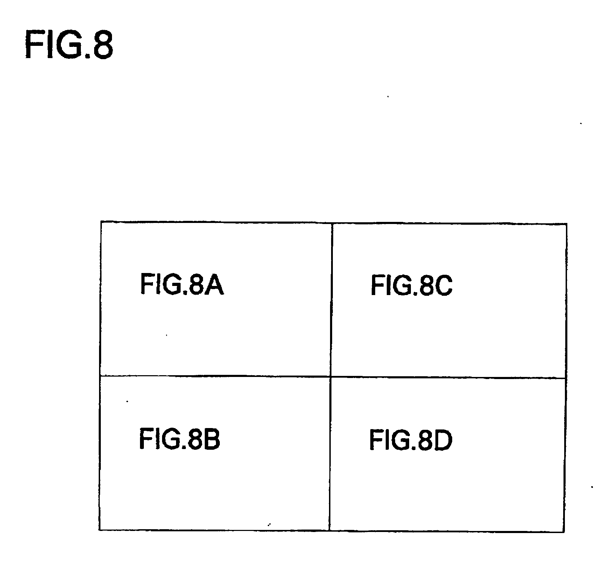

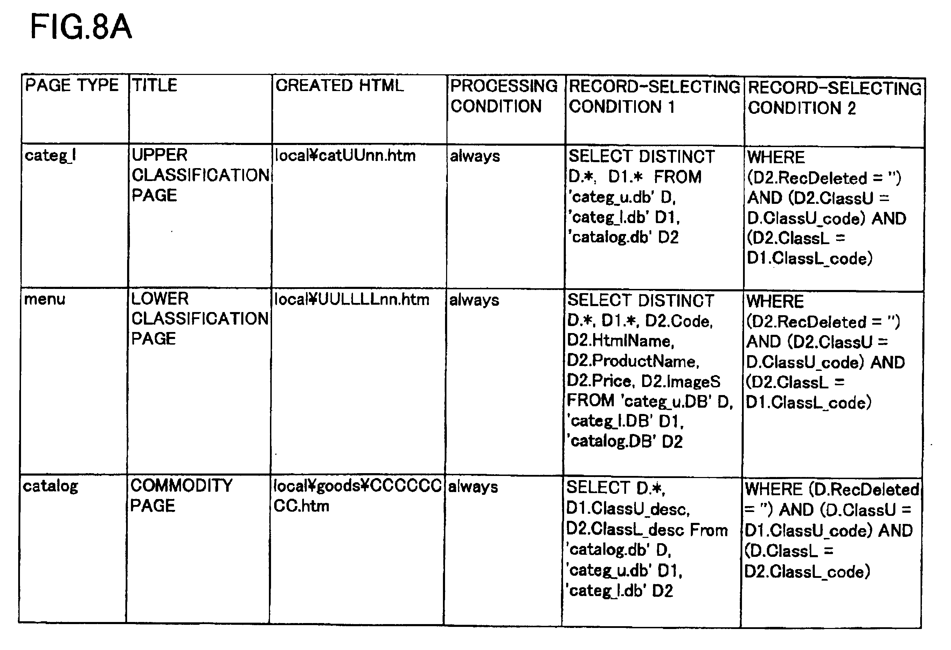

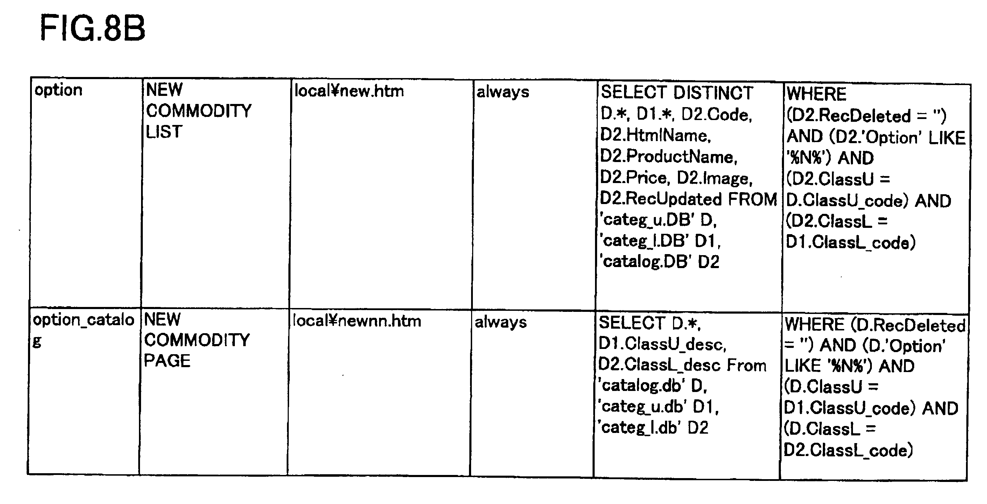

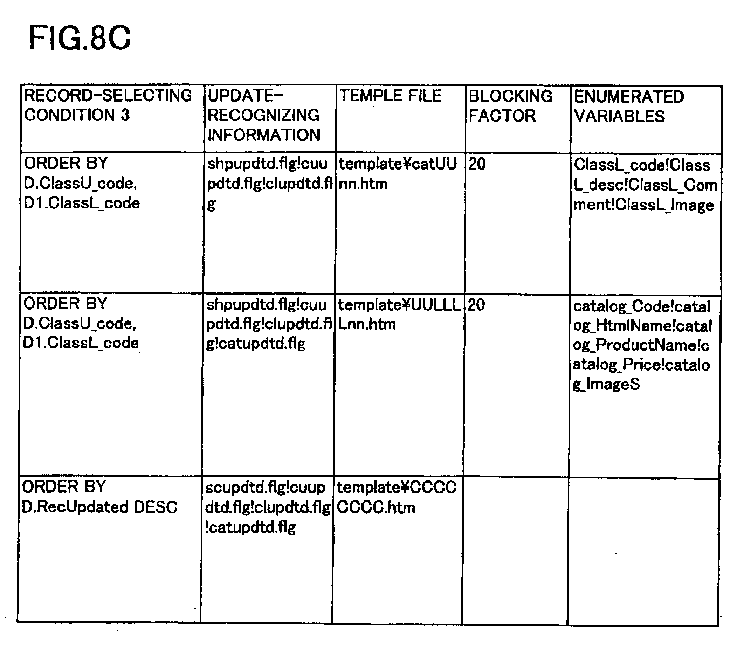

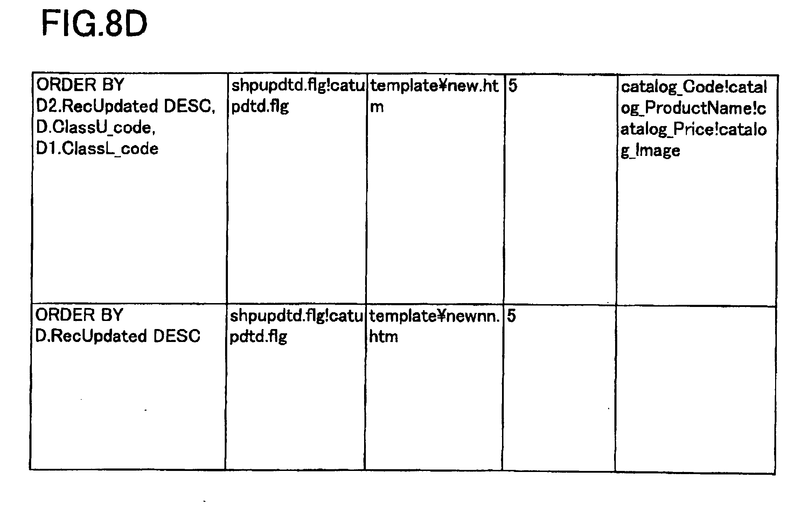

Figs. 7 and 8 are illustrations, showing one embodiment of a page-creating control file that is made up as page-creating control information. The page-creating control file is prepared in the form of a tab-separated text file. In the file, each line generates a kind of a page. A record consists of fifteen fields. Respective titles and functions of the fields are outlined as follows:
(1) Field of page type: type of a page to be created;
(2) Field of title : title of a page to be created;
(3) Field of created HTML filename: filename of a page to be created;
(4) Field of processing condition: conditions to create a page;
(5) Field of record-selecting condition 1: conditions written in SQL to select a record or field of a database;
(6) Field of record-selecting condition 2: the same as the above (5), but this is a second portion divided for description therein;
(7) Field of record-selecting condition 3: the same as the above (5), but this is a third portion divided for description therein;
(8) Field of update-recognizing information: flag indicating whether a database as a source of information has been updated;
(9) Field of template filename: template filename to be used;
(10) Field of blocking factor: the maximum number of records to be displayed on a page in list pages;
(11) Field of enumerated variable: fields of a commodity database displayed on list pages; and, (12)-(15) reserve fields.

The page-creating control file is designed to allow various page-producing conditions to be easily customized by such conditions being written to an external file as much as possible, which external file is independent of a program. Since the above-listed functions are briefly described, supplementary descriptions uncovered by the above brief description will now be mainly provided.

The "field of page type" will now be described. A page-creating program for reading in and then processing a file includes respective routines that correspond to page types. The page-creating program executes a condition decision and calculation using inherent codes. A description in the "field of page type" serves a function of indicating a code inherent to each page type. For example, referring to Fig. 3, respective page types: "categ_u" for the top page; "categ₋l" for the upper classification page; "menu" for the lower classification page; "single" for the annexed pages ranging from the site guide to the home visit sales law and further displaying only shop database information; "option" for the new commodity list; and, "option_catalog" for the new commodity page. The page types are set on the basis of kinds of databases as a source of information, the number of pages to be created, and kinds of links to be created.

The "field of created HTML filename" has the same value as an HTML filename when being of a page type to generate only one page, such as "single", "categ₋u", and "option." When the "field of created HTML filename" falls under any one of other page types, a filename-creating method is expressed in a simulative manner. For example, in the upper classification page (catUUnn.htm), a fixed character string of "cat" is combined with a two-digit value in a field of "upper classification code", and further with two-digit consecutive numbers (01, 02, 03, etc.), thereby creating an HTML file. In the commodity page, a value in a field of "commodity code" is a main filename, to which an extension of "htm" is added, thereby creating an HTML file. Characters improper as a filename are appropriately replaced, thereby automatically creating an HTML file.

The "field of processing condition" defines conditions to create a page. More specifically, a predetermined description is made to the field of the processing condition on a row (record) of a related page in the page-creating control file, thereby providing control as to whether the related page is created. When the related page is not created, then the use of the under-mentioned condition output-indicating tag controls a description of link to the related page in a template file that stores page design information. Thus, a link error is prevented, which otherwise would occur when the related page is not created.

The "field of update-recognizing information" determines whether any database referenced by a created page has been updated, and then decides whether a record of the database is processed only when the database has been updated. The "field of update-recognizing information" indicates which one is referenced among flag files that corresponds to the databases. When any one of such indicated flag files has been updated after previous automatic organization, then an HTML file is created. The database and the flag file are related as follows:
- Shop database:: shpupdtd.flg; scupdtd.flg;
- commodity database:: catupdtd.flg;
- upper classification table:: cuupdtd.flg; and,
- lower classification table:: clupdtd.flg
where scupdtd.flg is updated when the field of the database referenced in the commodity page is updated.

The "field of blocking factor" refers to the number of records of the commodity database to be output to a page in list pages. Needless to say, enumerated variables as many as the blocking factor must be given in a template of the page. In addition, for example, in the upper and lower classification pages, there is an upper limit to the number of lists to be displayed on one page. Such an upper limit appears in the "field of blocking factor" of the page-creating control file. When the number of the records of the commodity database to be displayed on a page are greater than the upper limit, then a plurality of pages are created, each of which is linked to the previous and following pages through links.

The "field of enumerated variable" represents fields of the commodity database to be displayed on list pages. For example, the fields of the commodity database, which can be displayed on the upper and lower classification pages, and a combination of such fields are written in the "field of enumerated variable", and are then controlled. In the embodiments described in this specification and actual embodiments, restrictions are placed such that twenty or fewer enumerated variables are described in a template as a standard in order to permit twenty enumerated variables to be described in an HTML page. When the number of upper classifications in which commodities are present is less than twenty, then the under-mentioned link failure prevention-indicating tag inhibits a description of a link to each remaining area or each blank portion from being created, thereby preventing the occurrence of a link error. Such a restriction is to limit the number of the enumerated variables to be provided in a template, in view of an aesthetic appearance when the enumerated variables are displayed using a browser. Alternatively, other numerals may be used, depending upon a data status of the database to be actually used as well as designs of HTML pages.

In the automatic digital content-organizing system according to the present invention, the above-described structure allows a user to flexibly change specification of the system. In addition, no programmatic description is included in a template file. Instead, the template file is described using variable tags in simpler expression. Such a system of design allows for a designer's free design as well as a flexible change in the system.

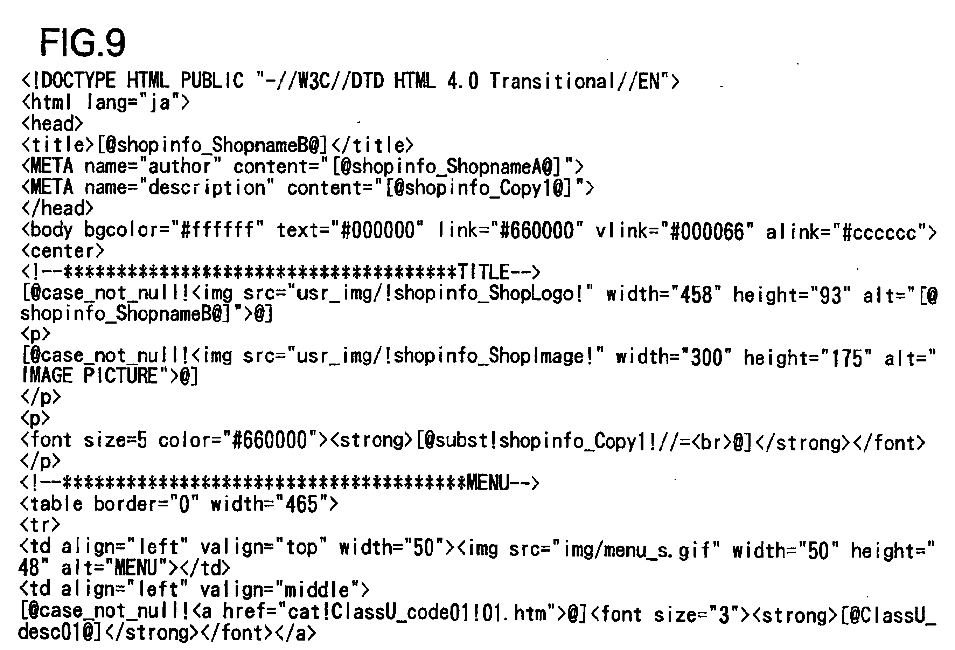

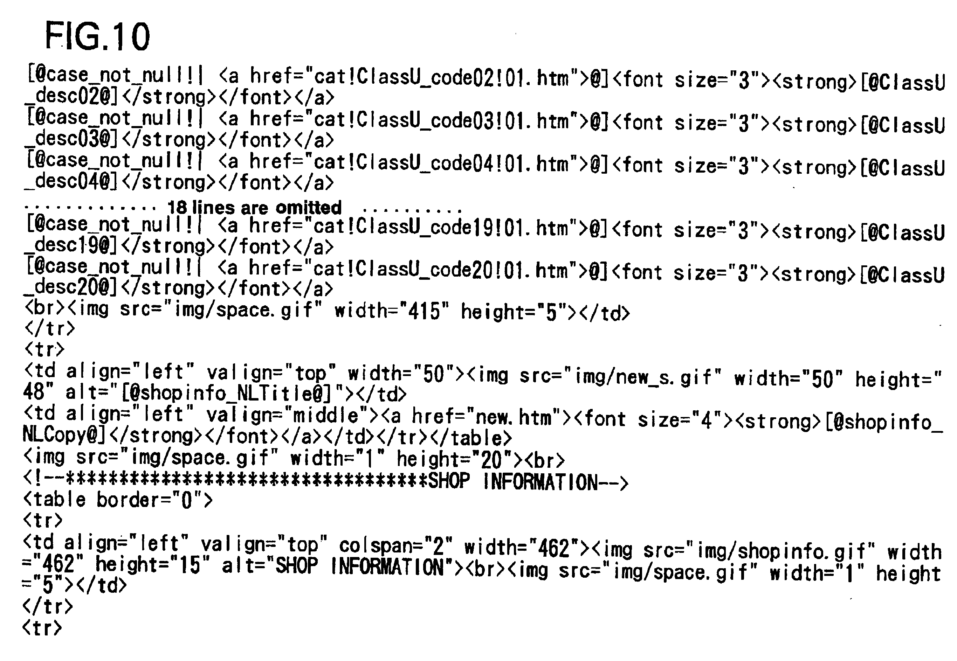

Figs. 9-11 are illustrations, showing one embodiment of a template of a ^{"}top page." The template itself is an HTML file, and has variable tags inherent to the present invention embedded therein. For convenience of description, an intermediate portion of enumerated variables in the template is partially omitted.

The variable tag starts with a beginning tag that follows:
"[@"

The variable tag terminates with an ending tag that follows:
"@]"
For example, a variable name appearing in the above variable tag is provided below for a field of the shop database:
"shopinfo_ShopnameA"
For example, another variable name for the commodity database is given as follows:
^{"}catalog₋Code"
As seen from the above, a proper database name is preferably added to the top of the variable name in order to avoid confusing variables.

The link failure prevention-indicating tag will now be described. This tag may also be called a null-inhibiting tag. When a value of a variable is null (a character length is zero), then the link failure prevention-indicating tag functions to inhibit output of character strings including the previous and following descriptions with respect to the variable. An example of the link failure prevention-indicating tag is shown below: 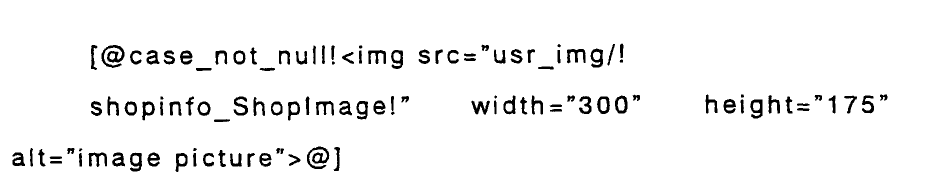 where "!" is a separation character. In the above example, when the following variable is null, then the previous and following character strings with respect to the following variable is inhibited from being output in order to avoid disordering a display on a screen when an image file is absent:
"shopinfo₋ShopImage"

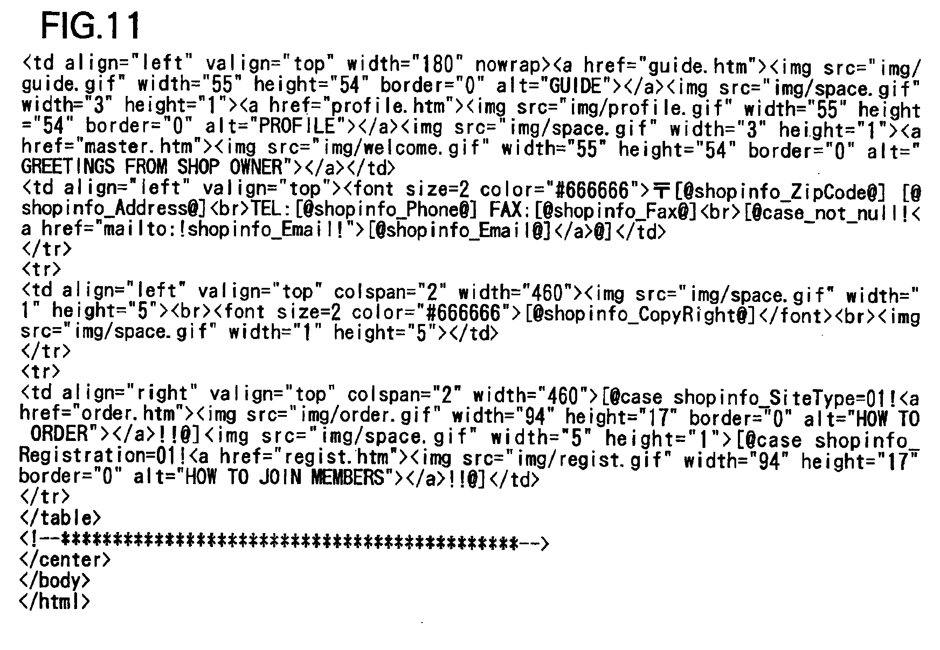

The condition output-indicating tag will now be described. In Fig. 11, the following tag is shown positioned at line 14: 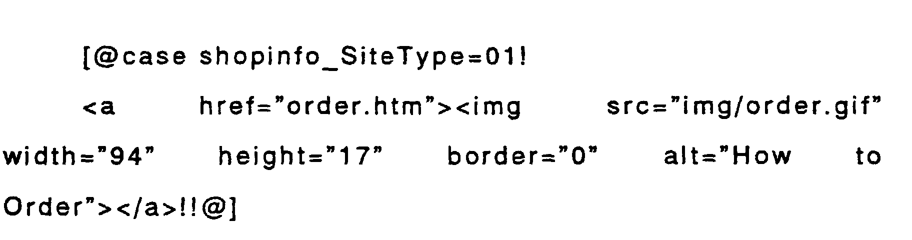 In the above example, when the field of "presence or absence of order page" in the shop database has a value of 01, then all descriptions in the tag are output, thereby displaying "How to Order" on the screen, and further creating a link to "order page." Meanwhile, an order page is created by a description of the page-creating control file. In this way, a site structure is controlled according to the present invention.

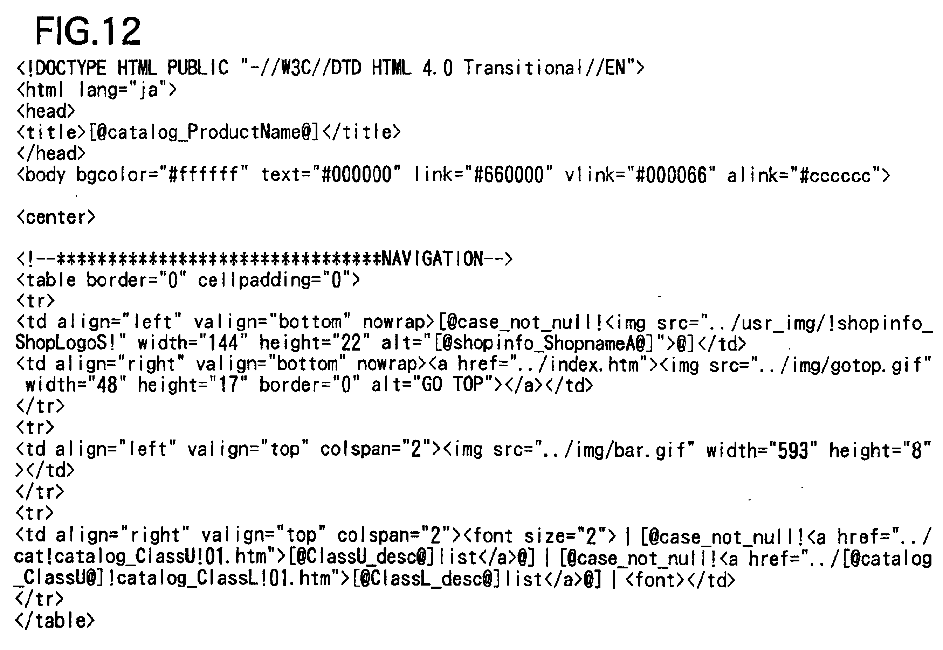

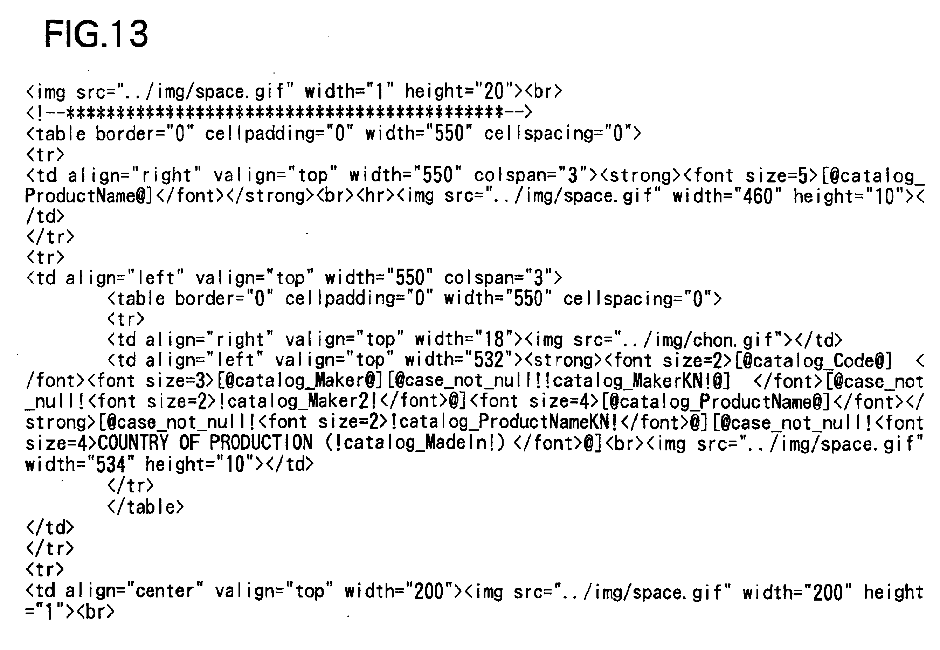

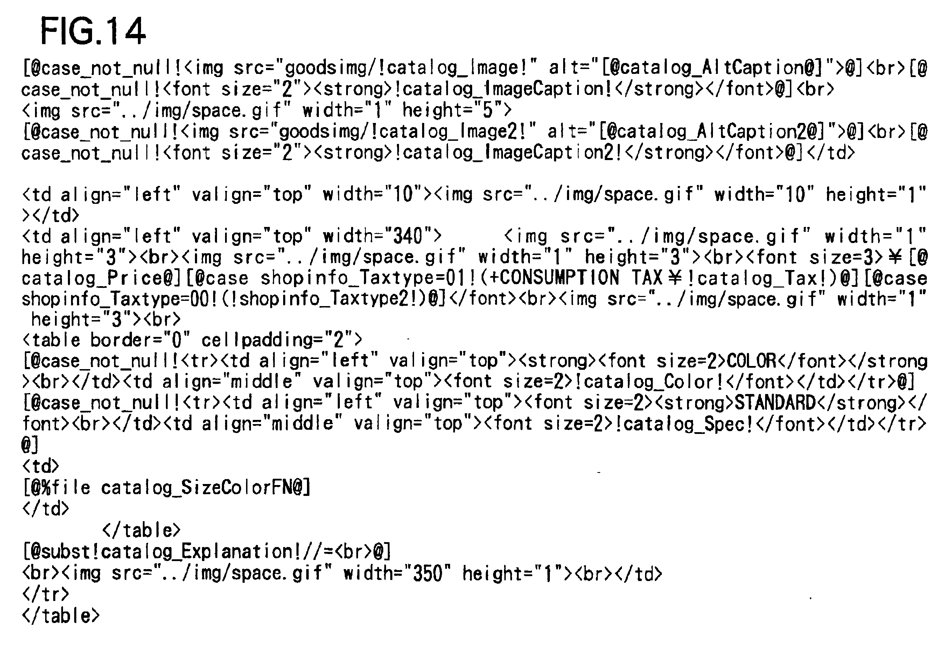

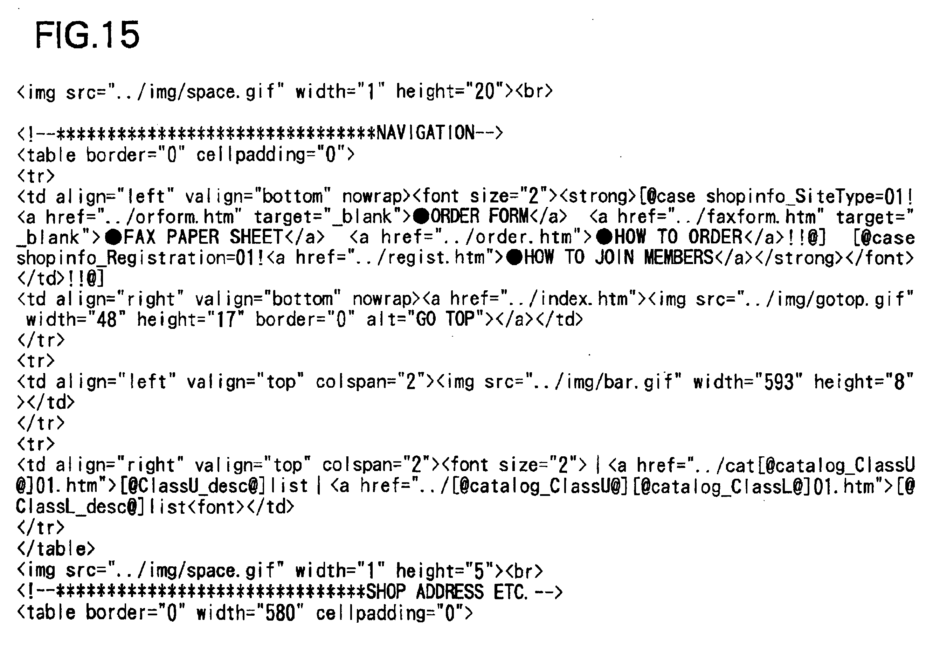

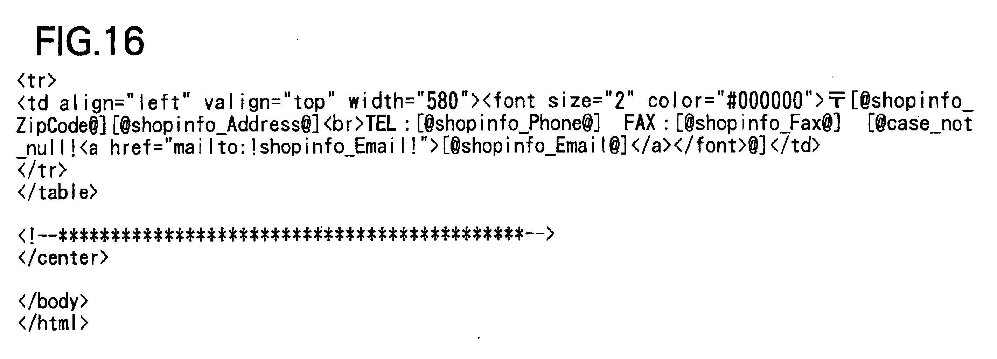

Figs. 12-16 are illustrations, showing one embodiment of a template of a "commodity page." The template contains the null-inhibiting tags) and are further written in such a manner that two or fewer images of commodities are displayed. A substitution-specifying tag is used in a field of "descriptive sentence" of the commodity database. The following is the substitution-specifying tag:
[@subst!catalog₋Explanation!//=〈br〉@]
The above example indicates that two slashes "//" in the field of the descriptive sentence ("Explanation") of the commodity database is replaced by a tag of "〈br〉", which tag represents a line feed in HTML. The slashes "//" are substituted for data that is stored in the database at a memorandum type field by way of a line feed. This substitution is intended to avoid disordering the preceding data when the same data is output to a tab-separated text file in the course of processing. Although a sentence is not written on another line, even when a line feed code is present in HTML; the above substitution-specifying tag smoothes out such an inconvenience. Consequently, a portion in which the line feed is placed when data is entered is brought onto another line, and is then displayed on the screen.

In addition to the above, the substitution-specifying tag can be utilized to provide a display similar to that is obtained when a partitioned table is looked up. Such an example is shown below: 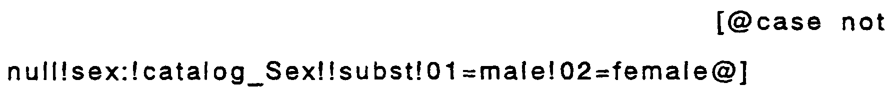 In the above example, when a field of sex ("Sex") has a value of 01, then a character of "male" is displayed. When the above field has a value of 02, then a character of "female" is displayed. In addition, in the above example, a field name of "sex" is specified as null inhibition.

Further, the substitution-specifying tag can be utilized for an application in which an image file of an icon is changed according to a field of "upper classification code" of the commodity database. An example is shown below:
〈img src="img/[@categ₋Ucode@].gif@]"〉
The above tag displays an image picture in which a value in the field of "upper classification code" is a main filename and "gif" is an extension. More specifically, the image picture consistent with the content of "upper classification code" can be displayed as an icon. Thus, the substitution-specifying tag is possible to provide various effects in simple expression. Such a tag description is similar to an HTML description, with which a Web designer is familiar. Therefore, it is easy for the Web designer to learn such a tag description.

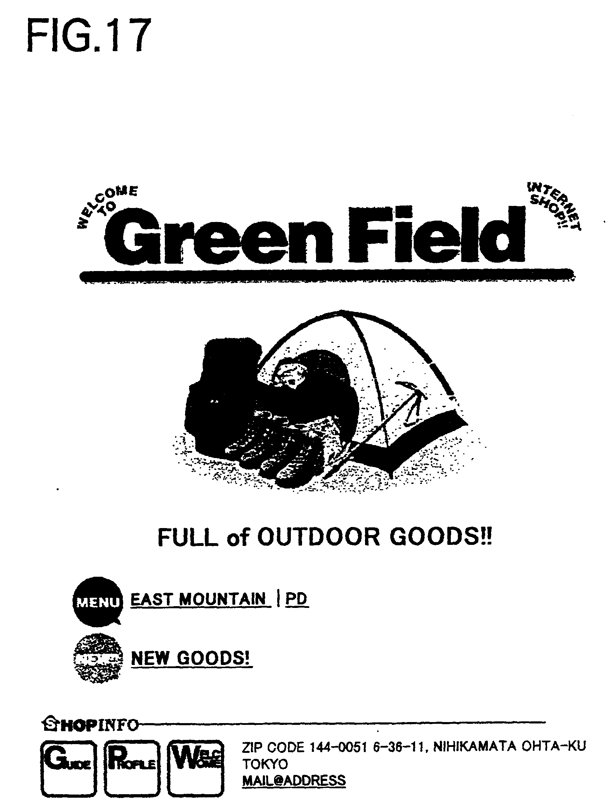

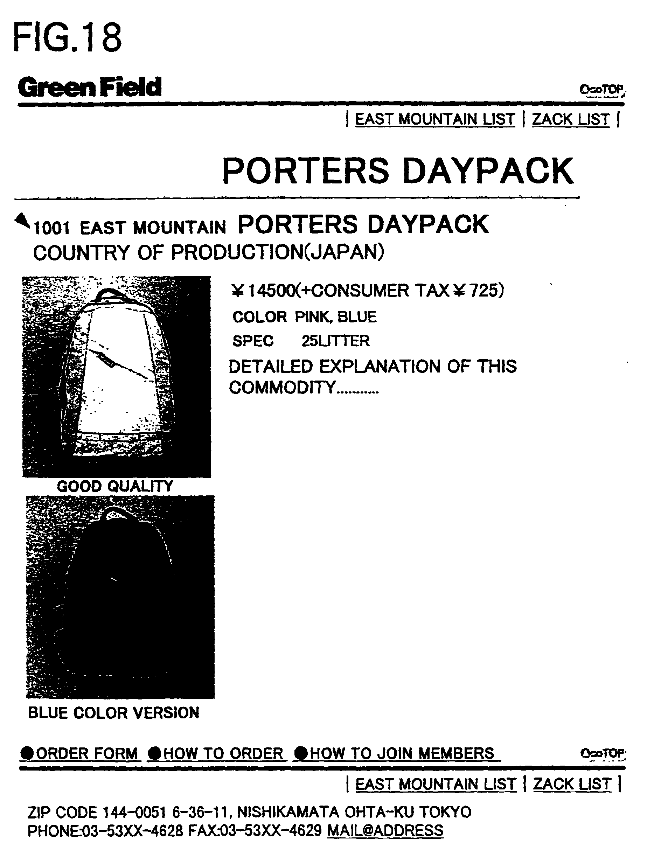

Fig. 17 shows a "top page" displayed using a browser. The top page is created by the automatic digital content-organizing system according to the present invention. Fig. 18 illustrates a "commodity page" displayed by means of the browser. The commodity page is produced by the automatic digital content-organizing system according to the present invention. Such a refined design is difficult to acquire when the art of CGI or ASP is used. In contrast, the present invention allows for easy creation of such illustrated pages.

Although the above-described embodiments are concerned with a shopping site, the disclosed art of the present invention is not limited thereto, but is applicable to a news site, a site of public relations, a BBS site, and others. Furthermore, the present invention is applicable to automatic organization of HTML as well as other types of digital content with a hypertext link, such as XML.

As amplified in the above description, the automatic digital content-organizing system according to the present invention creates HTML pages by the steps of: indicating to a program types of the HTML pages and a method for creating the HTML pages, all of which HTML pages form a site; defining designs of the created HTML pages in combination with such indicated types and method; regularly extracting data such as commodities from a single or multiple databases: and, permitting the extracted data to be embedded in the HTML pages based on templates that include such defined designs. In the above-described system, a program element is separated from a design element. Therefore, a user and a designer are allowed to create HTML pages having enhanced designability and a Web site, and further to change designs of the HTML pages without the risk of run-away or malfunction of a program. Furthermore, the user and the designer are free to have all sites structured in accordance with their original designs. As a result, the created Web site has enhanced appeal to the viewer, thereby more successfully accomplishing an object in establishing the site. Furthermore, the user can simply enter data into the database, and then make up image data; therefore, less labor is required to add or change commodities, with consequential rapid maintenance of the Web site.

Moreover, information on a structure of a site to be created is not contained in a program, but is placed in the page-creating control means that is recorded in an external file, which external file is separate from the program. Accordingly, a template does not contain any programmatic description such as database search conditions and output indication, but is a usual HTML file having variable, tags added thereto. Therefore, for the Web designer having a profound acquaintance with HTML, it is easy to understand such a template, and further to add any description thereto. Thus, the user is allowed to flexibly change a site structure.

## Claims

1. An automatic digital content-organizing system, comprising:
a means for preparing digital content including a character and an image portion by means of one of HTML and any other protocol-based digital content description language for purposes of information processing;
a database information storage means for storing one of a single database and multiple databases, said database being a source of information for creating said digital content;
a management means for administering retrieval of data from said database information storage means and input-output of the data from said database information storage means;
a page-creating control information storage means for storing page-creating control information, said page-creating control information containing a page structure and a method for creating said page structure, said page structure consisting of a plurality of kinds of pages;
a page design information storage means for storing page design information in a template that contains two tags, in which one of said tags specifies respective designs of said page structure and respective positions at which fields of said database are displayed, while another tag is a link failure prevention-indicating tag that functions to avoid including a description of a link to one of image information and any other page when said one of said image information and said other page is absent, and further to avoid including respective descriptions of the links to said image information and said other page when said image information and said other page are both absent;
a means for reading out said page-creating control information from said page-creating control information storage means;
a means for reading out information in said database from said database information storage means according to said page-creating control information, in which the information in said database is read out in a predetermined format under control of said management means;
a means for reading out optimum page design information from said page design information storage means according to said page-creating control information; and,
a program-storing means for storing a program, said program permitting such read information in said database to be embedded in said page design information, said program thereby producing pages that form said digital content.

2. An automatic digital content-organizing system as defined in claim 1, further comprising:
said page design information storage means for storing a template that contains a substitution-specifying tag, said substitution-specifying tag replacing a predetermined field of said database with a predetermined description, and then displaying such a replaced description when said database has a predetermined value in said predetermined field; and,
said program-storing means for storing a program that executes such substitutional specification.

3. An automatic digital content-organizing system as defined in claim 2, further comprising:
the page-creating control information storage means for storing said page-creating control information, to which condition output-indicating information is added, said condition output-indicating information determining on the basis of a value in a particular field of said database whether a particular page is created;
said page design information storage means for storing said page design information, to which a condition output-indicating tag is added, the condition output-indicating tag indicating depending upon a value in a particular field of said database whether a predetermined character string including a link to any other page is output; and,
said program-storing means for storing a program that executes such condition output indication.

4. A record medium having digital content recorded therein, said digital content being automatically organized by said automatic digital content-organizing system as defined in one of claims 1-3.
